# EUROPEAN PATENT APPLICATION

(11) **EP 2 479 920 A2**
(43) Date of publication of application: **25.07.2012**
(21) Application number: 12157614.4
(22) Date of filing: 23.11.2005
(51) Int. Cl.: H04L 7/10, G06F 13/38, H04W 88/02, H04L 5/00

(54) **Methods and systems for updating a buffer**

(30) Priority: 24.11.2004 US 630853 P
(62) Divisional of application: 05852048.7
(71) Applicant: Qualcomm Incorporated, San Diego, CA 92121-1714 (US)
(72) Inventor: Wiley, George, San Diego CA 92121 (US); Steele, Brian, San Diego CA 92121 (US)
(74) Representative: Hohgardt, Martin

(57) **Abstract**

Methods for conveying timing information across a communication link between a first processor and a second processor are described, wherein the communication link is in hibernation mode, the method comprising: scheduling a time event at the first processor to convey the timing information to the second processor; initiating a link wakeup by the first processor at the occurrence of the time event; and detecting the link wakeup at the second processor, and using the detected link wakeup timing to synchronize the first and second processors with respect to the conveyed timing information.

## Description

### BACKGROUND

### Field of the Invention

The present invention relates generally to methods and systems for updating a buffer. More particularly, the invention relates to methods and systems for updating a buffer across a communication link.

### Background of the Invention

In the field of interconnect technologies, demand for ever increasing data rates, especially as related to video presentations, continues to grow.

The Mobile Display Digital Interface (MDDI) is a cost-effective, low power consumption, transfer mechanism that enables very-high-speed data transfer over a short-range communication link between a host and a client. MDDI requires a minimum of just four wires plus power for bi-directional data transfer that delivers a maximum bandwidth of up to 3.2 Gbits per second.

In one application, MDDI increases reliability and decreases power consumption in clamshell phones by significantly reducing the number of wires that run across a handset's hinge to interconnect the digital baseband controller with an LCD display and/or a camera. This reduction of wires also allows handset manufacturers to lower development costs by simplifying clamshell or sliding handset designs.

In controlling an LCD display across an MDDI link, one problem that arises relates to image flickering when the display is refreshed. Typically, what is needed is either a long persistence conversion or a refresh rate that is higher than what the human eye can perceive. Long persistence conversion results in image smearing when images appear to move. Therefore, it is desirable for the display to have a high refresh rate. A typical problem that occurs, however, is image tearing. The problem is that while the display is being refreshed at a high rate, the frame buffer associated with the display is being filled at a slower rate. As a result, the display image may reflect both updated and old image information within the same frame of the display.

In one solution, multiple buffers are used and image information is cycled through the multiple buffers to avoid the image tearing problem described above. This includes commonly known "double buffering" approaches. The drawback of such solution, however, is clearly in the increased cost and chip space requirements in implementation.

What is needed therefore are methods and systems to enable buffer update solutions that solve the above described problems while satisfying the cost and space requirements of MDDI applications.

### SUMMARY

The present invention relates to methods and systems for updating a buffer.

In one aspect, the present invention provides a method for updating a buffer, which includes strategically writing to the buffer to enable concurrent read and write to the buffer. The method eliminates the need for double buffering, thereby resulting in implementation cost and space savings compared to conventional buffering approaches. Among other advantages, the method prevents image tearing when used to update a frame buffer associated with a display, but is not limited to such applications.

In another aspect, the present invention provides efficient mechanisms to enable buffer update across a communication link. In one example, the present invention provides a method for relaying timing information across a communication link. The method, however, is not limited to relaying timing information, and may be used in more general contexts as can be understood by persons skilled in the art(s) based on the teachings herein.

Further embodiments, features, and advantages of the present invention, as well as the structure and operation of the various embodiments of the present invention, are described in detail below with reference to the accompanying drawings.

### BRIEF DESCRIPTION OF THE DRAWINGS

The accompanying drawings, which are incorporated herein and form a part of the specification, illustrate the present invention and, together with the description, further serve to explain the principles of the invention and to enable a person skilled in the pertinent art to make and use the invention.

FIG. 1 is a block diagram that illustrates an example environment using a Mobile Display Digital Interface (MDDI) interface.

FIG. 1A is a diagram of a digital data device interface coupled to a digital device and a peripheral device.

FIG. 2 is a block diagram that illustrates an MDDI link interconnection according to an embodiment of the example of FIG. 1.

FIG. 3 is an example that illustrates the image tearing problem.

FIG. 4 is a process flowchart that illustrates a method for updating a buffer according to the present invention.

FIG. 5 illustrates examples of the method of FIG. 4.

FIGs. 6A, 6B illustrate buffer read/write strategies.

FIG. 7 is a process flowchart that illustrates a method for conveying timing information across a communication link according to the present invention.

FIG. 8 illustrates an example signal timing diagram for initiating MDDI link wakeup to convey timing information.

The present invention will be described with reference to the accompanying drawings. The drawing in which an element first appears is typically indicated by the leftmost digit(s) in the corresponding reference number.

### DETAILED DESCRIPTION

This specification discloses one or more embodiments that incorporate the features of this invention. The disclosed embodiment(s) merely exemplify the invention. The scope of the invention is not limited to the disclosed embodiment(s). The invention is defined by the claims appended hereto.

The embodiment(s) described, and references in the specification to "one embodiment", "an embodiment", "an example embodiment", etc., indicate that the embodiment(s) described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described.

Embodiments of the invention may be implemented in hardware, firmware, software, or any combination thereof. Embodiments of the invention may also be implemented as instructions stored on a machine-readable medium, which may be read and executed by one or more processors. A machine-readable medium may include any mechanism for storing or transmitting information in a form readable by a machine (e.g., a computing device). For example, a machine-readable medium may include read only memory (ROM); random access memory (RAM); magnetic disk storage media; optical storage media; flash memory devices; electrical, optical, acoustical or other forms of propagated signals (e.g., carrier waves, infrared signals, digital signals, etc.), and others. Further, firmware, software, routines, instructions may be described herein as performing certain actions. However, it should be appreciated that such descriptions are merely for convenience and that such actions in fact result from computing devices, processors, controllers, or other devices executing the firmware, software, routines, instructions, etc.

### Mobile Display Digital Interface (MDDI)

The Mobile Display Digital Interface (MDDI) is a cost-effective, low power consumption, transfer mechanism that enables very-high-speed serial data transfer over a short-range communication link between a host and a client.

In the following, examples of MDDI will be presented with respect to a camera module contained in an upper clamshell of a mobile phone. However, it would be apparent to persons skilled in the relevant art(s) that any module having functionally equivalent features to the camera module could be readily substituted and used in embodiments of this invention.

Further, according to embodiments of the invention, an MDDI host may comprise one of several types of devices that can benefit from using the present invention. For example, the host could be a portable computer in the form of a handheld, laptop, or similar mobile computing device. It could also be a Personal Data Assistant (PDA), a paging device, or one of many wireless telephones or modems. Alternatively, the host could be a portable entertainment or presentation device such as a portable DVD or CD player, or a game playing device. Furthermore, the host can reside as a host device or control element in a variety of other widely used or planned commercial products for which a high speed communication link is desired with a client. For example, a host could be used to transfer data at high rates from a video recording device to a storage based client for improved response, or to a high resolution larger screen for presentations. An appliance such as a refrigerator that incorporates an onboard inventory or computing system and/or Bluetooth connections to other household devices, can have improved display capabilities when operating in an internet or Bluetooth connected mode, or have reduced wiring needs for in-the-door displays (a client) and keypads or scanners (client) while the electronic computer or control systems (host) reside elsewhere in the cabinet. In general, those skilled in the art will appreciate the wide variety of modern electronic devices and appliances that may benefit from the use of this interface, as well as the ability to retrofit older devices with higher data rate transport of information utilizing limited numbers of conductors available in either newly added or existing connectors or cables. At the same time, an MDDI client may comprise a variety of devices useful for presenting information to an end user, or presenting information from a user to the host. For example, a micro-display incorporated in goggles or glasses, a projection device built into a hat or helmet, a small screen or even holographic element built into a vehicle, such as in a window or windshield, or various speaker, headphone, or sound systems for presenting high quality sound or music. Other presentation devices include projectors or projection devices used to present information for meetings, or for movies and television images. Another example would be the use of touch pads or sensitive devices, voice recognition input devices, security scanners, and so forth that may be called upon to transfer a significant amount of information from a device or system user with little actual "input" other than touch or sound from the user. In addition, docking stations for computers and car kits or desk-top kits and holders for wireless telephones may act as interface devices to end users or to other devices and equipment, and employ either clients (output or input devices such as mice) or hosts to assist in the transfer of data, especially where high speed networks are involved. However, those skilled in the art will readily recognize that the present invention is not limited to these devices, there being many other devices on the market, and proposed for use, that are intended to provide end users with high quality images and sound, either in terms of storage and transport or in terms of presentation at playback. The present invention is useful in increasing the data throughput between various elements or devices to accommodate the high data rates needed for realizing the desired user experience.

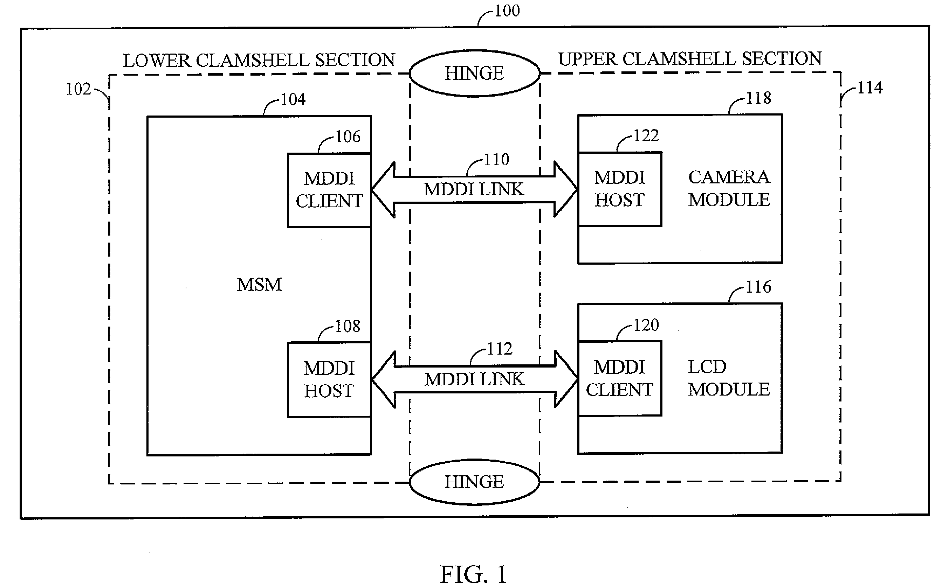

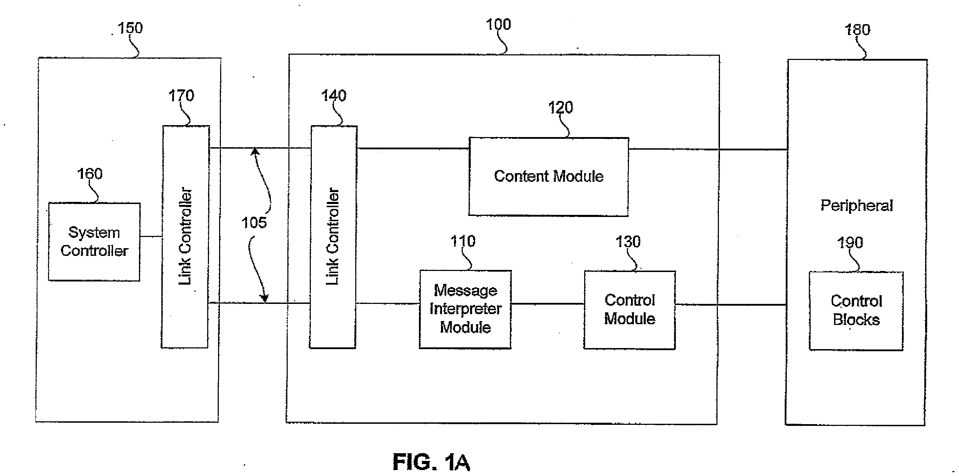

FIG. 1A is a diagram of a digital data device interface 100 coupled to a digital device 150 and a peripheral device 180. Digital device 150 can include, but is not limited to, a cellular telephone, a personal data assistant, a smart phone or a personal computer. In general digital device 150 can include any type of digital device that serves as a processing unit for digital instructions and the processing of digital presentation data. Digital device 150 includes a system controller 160 and a link controller 170.

Peripheral device 180 can include, but is not limited to, a camera, a bar code reader, an image scanner, an audio device, and a sensor, hi general peripheral 180 can include any type of audio, video or image capture and display device in which digital presentation data is exchanged between a peripheral and a processing unit. Peripheral 180 includes control blocks 190. When peripheral 180 is a camera, for example, control blocks 190 can include, but are not limited to lens control, flash or white LED control and shutter control. Digital presentation data can include digital data representing audio, image and multimedia data.

Digital data interface device 100 transfers digital presentation data at a high rate over a communication link 105. In one example, an MDDI communication link can be used which supports bi-directional data transfer with a maximum bandwidth of 3.2 Gbits per second. Other high rates of data transfer that are higher or lower than this example rate can be supported depending on the communications link. Digital data interface device 100 includes a message interpreter module 110, a content module 120, a control module 130 and a link controller 140.

Link controller 140, which is located within digital data interface 100, and link controller 170, which is located within digital device 150 establish communication link 105. Link controller 140 and link controller 170 may be MDDI link controllers.

The Video Electronics Standards Association ("VESA") MDDI Standard, which is incorporated herein by reference in its entirety, describes the requirements of a highspeed digital packet interface that lets portable devices transport digital images from small portable devices to larger external displays. MDDI applies a miniature connector system and thin flexible cable ideal for linking portable computing, communications and entertainment devices to emerging products such as wearable micro displays. It also includes information on how to simplify connections between host processors and a display device, in order to reduce the cost and increase the reliability of these connections. Link controllers 140 and 170 establish communication path 105 based on the VESA MDDI Standard.

U.S. Patent No. 6,760,772, entitled *Generating and Implementing a Communication Protocol and Interface for High Data Rate Signal Transfer,* issued to Zou et al. on July 6, 2004 ('772 Patent") describes a data interface for transferring digital data between a host and a client over a communication path using packet structures linked together to form a communication protocol for presentation data. Embodiments of the invention taught in the '772 Patent are directed to an MDDI interface. The signal protocol is used by link controllers, such as link controllers 140 and 170, configured to generate, transmit, and receive packets forming the communications protocol, and to form digital data into one or more types of data packets, with at least one residing in the host device and being coupled to the client through a communications path, such as communications path 105.

The interface provides a cost-effective, low power, bi-directional, high-speed data transfer mechanism over a short-range "serial" type data link, which lends itself to implementation with miniature connectors and thin flexible cables. An embodiment of link controllers 140 and 170 establishes communication path 105 based on the teachings of the '772 Patent. The '772 Patent is herein incorporated by reference in its entirety.

In other embodiments, link controllers 140 and 170 can both be a USB link controller or they both can include a combination of controllers, such as for example, an MDDI link controller and another type of link controller, such as, for example, a USB link controller. Alternatively, link controllers 140 and 170 can include a combination of controllers, such as an MDDI link controller and a single link for exchanging acknowledgement messages between digital data interface device 100 and digital device 150. Link controllers 140 and 170 additionally can support other types of interfaces, such as an Ethernet or RS-232 serial port interface. Additional interfaces can be supported as will be known by individuals skilled in the relevant arts based on the teachings herein.

Within digital data interface device 100, message interpreter module 110 receives commands from and generates response messages through communication link 105 to system controller 160, interprets the command messages, and routes the information content of the commands to an appropriate module within digital data interface device 100.

Content module 120 receives data from peripheral device 180, stores the data and transfers the data to system controller 160 through communication link 105.

Control module 130 receives information from message interpreter 130, and routes information to control blocks 190 of peripheral device 180. Control module 130 can also receive information from control blocks 190 and routes the information to the message interpreter module 110.

FIG. 1 is a block diagram that illustrates an example environment using an MDDI interface. In the example of FIG. 1, MDDI is used to interconnect modules across the hinge of a clamshell phone 100.

Referring to FIG. 1, a lower clamshell section 102 of clamshell phone 100 includes a Mobile Station Modem (MSM) baseband chip 104. MSM 104 is a digital baseband controller. An upper clamshell section 114 of clamshell phone 100 includes a Liquid Crystal Display (LCD) module 116 and a camera module 118.

Still referring to FIG. 1, an MDDI link 110 connects camera module 118 to MSM 104. Typically, an MDDI link controller is integrated into each of camera module 118 and MSM 104. In the example of FIG. 1, an MDDI Host 122 is integrated into camera module 112, while an MDDI Client 106 resides on the MSM side of the MDDI link 110. Typically, the MDDI host is the master controller of the MDDI link. In the example of FIG. 1, pixel data from camera module 118 are received and formatted into MDDI packets by MDDI Host 122 before being transmitted onto MDDI link 110. MDDI client 106 receives the MDDI packets and re-converts them into pixel data of the same format as generated by camera module 118. The pixel data are then sent to an appropriate block in MSM 104 for processing.

Still referring to FIG. 1, an MDDI link 112 connects LCD module 116 to MSM 104. hi the example of FIG. 1, MDDI link 112 interconnects an MDDI Host 108, integrated into MSM 104, and an MDDI Client 120 integrated into LCD module 116. In the example of FIG. 1, image data generated by a graphics controller of MSM 104 are received and formatted into MDDI packets by MDDI Host 108 before being transmitted onto MDDI link 112. MDDI client 120 receives the MDDI packets and reconverts them into image data for use by LCD module 116. Typically, image data is buffered using a frame buffer before being used to refresh the LCD display.

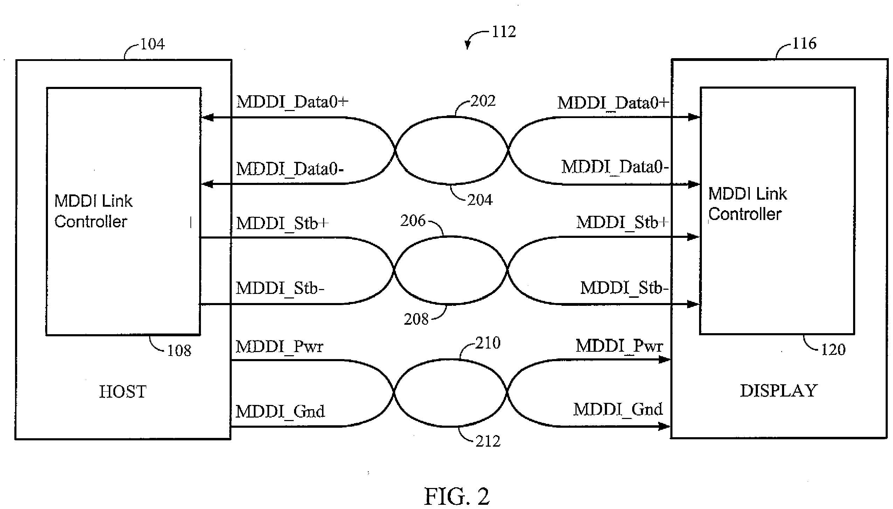

FIG. 2 is a block diagram that illustrates MDDI link interconnection 112 according to the example of FIG. 1. As described above, one of the functions of MDDI link 112 is to transfer image data from MSM 104 to LCD Module 116. A frame interface (not shown in FIG. 2) connects MDDI link controller 120 to modules of LCD Module 116. Similarly, another frame interface (not shown in FIG. 2) connects MDDI link controller 108 to appropriate modules of MSM 104. Typically, MDDI link controller 108 represents the host controller of the MDDI link, while MDDI link controller 120 represents the client controller of the MDDI. Other implementations, however, may reverse the roles of the two controllers.

MDDI link 112 includes a minimum of four wires, comprising two wires for data signals 202 and 204 and two wires for probe signals 206 and 208, in addition to two wires for power signals 210 and 211. Data signals 202 and 204 are bi-directional. Accordingly, data can be transmitted in either direction (from host to client and vice versa) using data signals 202 and 204. Strobe signals 206 and 208 are unidirectional, and may only be driven by the host controller of the link. Accordingly, in the example of FIG. 2, only host controller 108 may drive strobe signals 206 and 208.

### Method and Systems for Updating a Buffer

As described above, MDDI can be used to connect a baseband processor (MSM 104 in FIG. 2, for example) and a graphics controller (LCD module 116 in FIG. 2, for example). The baseband processor channels image information, typically received from a camera sensor, to the graphics controller, which uses the image information to create a display image. Typically, the graphics controller employs one or more frame buffers to store the image information received from the baseband processor before using it to generate the display image. As described above, image tearing is one problem that occurs. This happens when the image information is being read out of the frame buffer at a rate slower or faster than the rate at which it is being written to the frame buffer. Methods and systems for updating a buffer, which, among other advantages, solve the image tearing problem, will be described herein. It should be noted, however, that methods and systems according to the present invention are not limited to the specific exemplary embodiments in which they will described or to being used in an MDDI environment. Further, methods and systems of the present invention can be employed in various other applications that utilize buffering, and that may benefit from the advantages of the present invention.

### Image Tearing

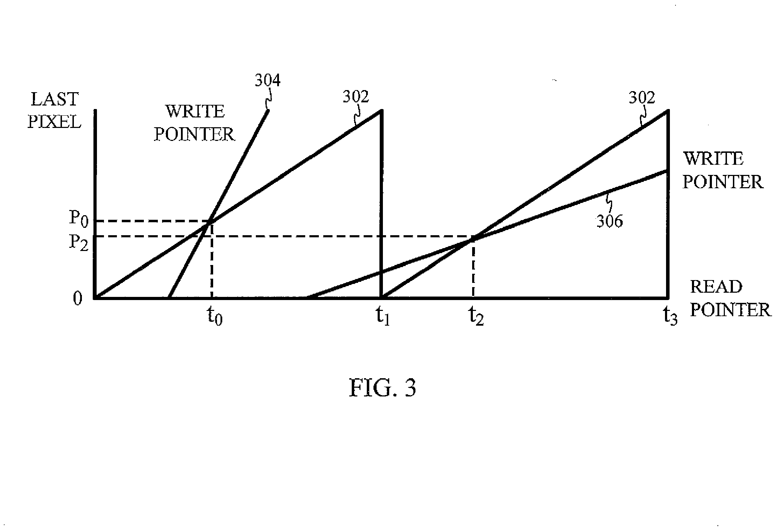

FIG. 3 illustrates two examples of image tearing that can occur while reading from and/or writing to a buffer. The diagram of FIG. 3 shows plots of read and write pointers as functions of buffer position and time. The read pointer represents the position in the buffer that is being read. The write pointer indicates the position in the buffer that is being written to. In the example of FIG. 3, the buffer position is defined in terms of pixel position in the buffer.

In the first example in FIG. 3, the buffer is being read at a slower rate than it is written to. This is illustrated by the relative slopes of read and write pointer lines 302 and 304. Note that read and write pointer lines 302 and 304 intersect at time to. Before time to, pixels in the buffer are being read prior to being updated. After time to, pixels are being updated prior to be read. Accordingly, within the same frame (from time o to time ti), pixels in positions o to pₒ (which corresponds to the pixel position read at time to) are read with older image information relative to pixels from position po to the last pixel in the buffer, which are read with updated image information. The result is image tearing with a lower portion of the image reflecting newer image information relative to an upper portion of the image.

In the second example in FIG. 3, the buffer is being read at a faster rate than it is written to. This is illustrated by the relative slopes of read and write pointer lines 302 and 306. Read and write pointer lines 302 and 306 intersect at time t₂. Before time t₂, pixels in the buffer are being updated prior to being read. After time t₂, pixels are being read prior to being updated. Accordingly, within the same frame (from time t_{\} to time t₃), pixels in positions o to p₂ (which corresponds to the pixel position read at time t₂) are read with newer image information relative to pixels from position p₂ to the last pixel in the buffer, which are read with old image information. The result is image tearing with an upper portion of the image reflecting newer image information relative to a lower portion of the image.

### Method for Updating a Buffer

A method to strategically update a buffer will now be provided. The method prevents image tearing when used to update a frame buffer associated with a display. The method may also be used in other buffering applications based on its apparent advantages as will be described herein.

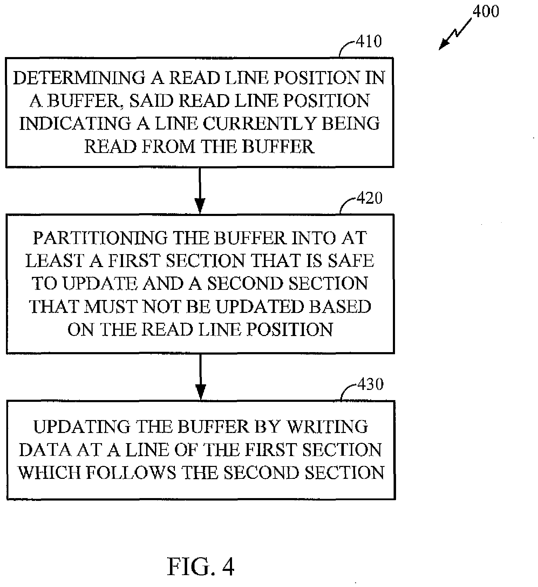

FIG. 4 is a process flowchart 400 that illustrates a method for updating a buffer according to the present invention. Process flowchart 400 begins in step 410, which includes determining a read line position in the buffer. The read line position indicates a line currently being read from the buffer. Typically, step 410 is achieved by determining the value of a read pointer that points to the read line position in the buffer.

Step 420 includes partitioning the buffer into at least a first section that is safe to update and a second section that must not be updated based on the read line position. It is noted here that partitioning the buffer does not refer here to a physical but to a logical partitioning of the buffer. Further, a logical partition of the buffer is not fixed and may change as will be understood from the teachings herein. The first section of the buffer includes lines of the buffer that have been read within the current buffer reading cycle based on the read line position. The first section also includes lines of the buffer that can be updated based on the read line position. Li other words, the first section includes lines whose content has just been read or lines that can be updated prior to the read line position reaching them based on the buffer read speed and the buffer write speed. Lines that cannot be updated prior to the read line position reaching them based on the buffer read speed and the buffer write speed belong to the second section of the buffer. In other words, lines of the second section of the buffer are those for which there is not sufficient time to update before they have to be read. Accordingly, lines of the second section of the buffer must have been updated during the last reading cycle of the buffer. [0053] Step 430 includes updating the buffer by writing data at a line of the first section which follows the second section based on the read line position. Typically, the buffer is updated at a position which is both safe to update as described above and which has already been read during the last reading cycle of the buffer. In one embodiment, step 430 includes writing data at a line of the first section which immediately follows the last line of the second section. Other variations of step 430 may also be possible as will be apparent to a person skilled in the art based on the teachings disclosed herein.

### Example Illustration

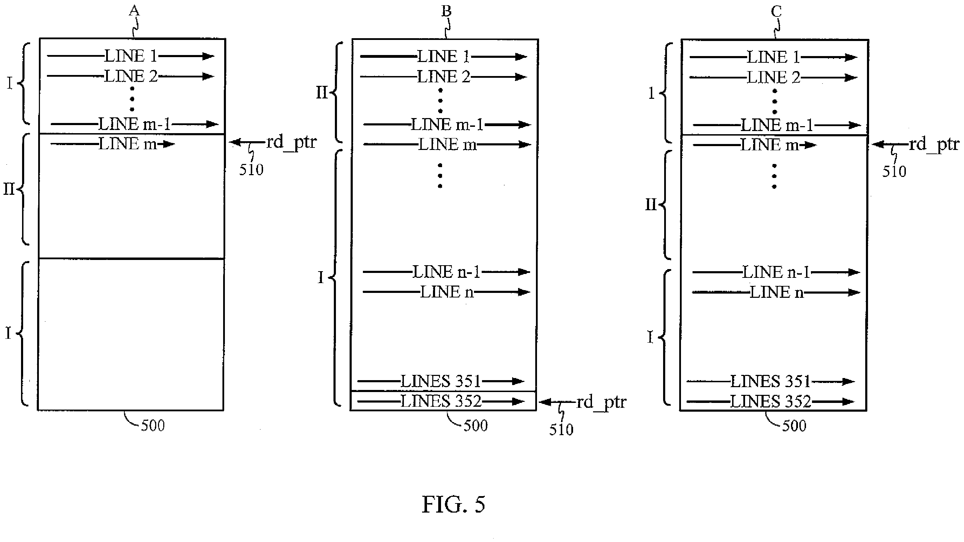

FIG. 5 provides examples that illustrate the method described above in FIG. 4. FIG. 5 shows three examples A, B, and C of reading a buffer 500. For purposes of illustration only, buffer 500 is shown to include 352 lines of data. A read pointer 510 indicates the read line position in the buffer. Sections labeled with the roman numeral "I" represent lines that belong to the first section of the buffer as described above. Sections labeled with the roman numeral "II" represent lines that belong to the second section of the buffer as described above.

In example A, shaded area "I" represents lines of the first section of the buffer which have already been read during the current reading cycle of the buffer, hi the example, this area includes lines 1 through m-1. Read pointer 510 indicates that line m is currently being read. Accordingly, area "II" in example A represents lines of buffer 500 that cannot be updated based on the current position of read pointer 510. In other words, there is no sufficient time to update lines in area "II" based on the current position of read pointer 510 and the read and write speeds to the buffer. Note that the first section of the buffer also includes an unshaded area "I" below area "II". This area "I" belongs to the first section as it is safe to update, but should not be updated given that it has not been read during the current reading cycle of the buffer. Updating unshaded area "I" prior to reading it would result in image tearing, as described in FIG. 3, where the upper portion of the image reflects older image information relative to the lower portion of the image.

In example B, the shaded area represents lines of the buffer which have already been read during the current reading cycle of the buffer. In the example, this area includes lines 1 through 351. Read pointer 510 indicates that line 352 is currently being read. Accordingly, area "II" in example B represents lines that must have been updated given the current read line position. Lines in area "II" cannot be updated based on the current read line position and the read and write speeds to the buffer, and belong to the second section of the buffer based on the description above. Lines in area "I" belong to the first section of the buffer, and are safe to update. To update the buffer, writing can begin in area "I". Data can be written at a line in area "I" that immediately follows area "II". This corresponds to line m in example B.

Example C illustrates a scenario subsequent to the one shown in B. In example C, read pointer 510 has wrapped around and is reading line m of the buffer. Accordingly, lines preceding the read pointer in the buffer belong to the first section of the buffer, and may be updated. Lines in area "II" must have been updated during the last write cycle to the buffer given the current read line position. Lines in area "II" cannot be updated, and belong to the second section of the buffer as described above. In other words, lines in area "II" must contain updated information given the read line position, as there is not sufficient time to update them before they have to be read. Shaded area "I" represents lines of the first section of the buffer that are safe to update, but should not be updated given that they have not been read during the last reading cycle of the buffer.

### Buffer Read/Write Strategies

Buffer read/write strategies to avoid image tearing or equivalent problems related to buffer update are described herein. Buffer update strategies according to the present invention further eliminate the need for the commonly adopted "double buffering" technique. Instead, a single buffer is used, which results in both implementation cost and space savings. The present invention is not limited to the exemplary strategies described herein, and variations which are apparent to persons skilled in the art(s) are also considered to be within the scope of the present invention.

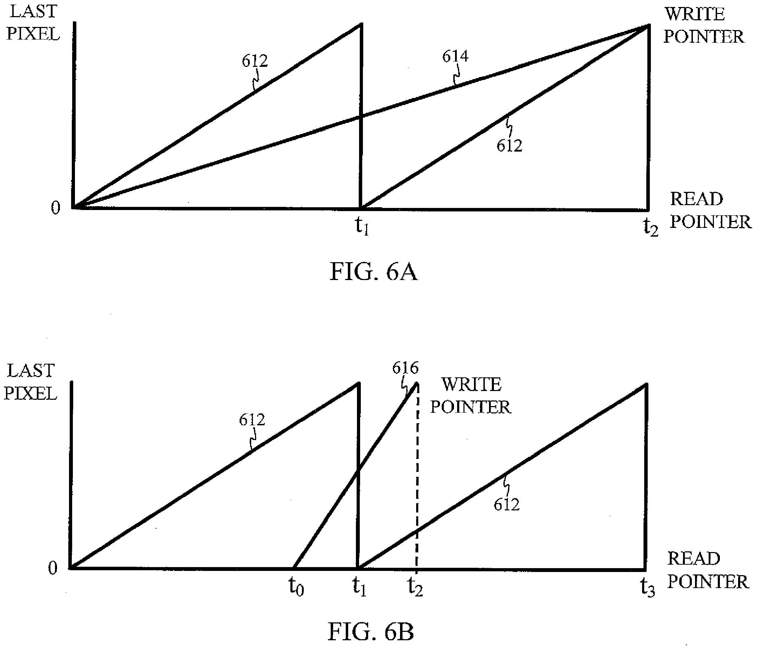

FIGs. 6A and 6B illustrate exemplary buffer read/write strategies according to the present invention. The diagrams of FIGs. 6A and 6B show plots of read pointer 612 and write pointers 614 and 616 as functions of buffer position and time. In the examples of FIGs. 6A and 6B, the buffer position is defined in terms of pixel position in the buffer, which may be equivalently replaced with any other measure of buffer position, such as line number, for example.

Referring to FIG. 6A, an exemplary buffer read/write strategy is depicted over two reading cycles of the buffer. In the first reading cycle, from time o to time U, the first half of the buffer is updated, while the entire buffer content is read. In the second reading cycle of the buffer, from time t₁ to time t₂, the second half of the buffer is updated, while the entire buffer content is read. Note that the first half of the buffer, during the second reading cycle, contains updated information that were written to the buffer during the first reading cycle. The second half of the buffer, during the second cycle, is updated prior to being read as shown by write pointer 614 preceding read pointer 612 in time over the second reading cycle. Accordingly, over both reading cycles, data read from the buffer belongs to the same update cycle of the buffer, and no image tearing occurs.

FIG. 6B illustrates another exemplary buffer read/write strategy over two reading cycles of the buffer. During the first reading cycle, the first half of the buffer is updated from time to to time t_{\}. During the second reading cycle, the second half of the buffer is updated from time ti to time t₂. Note that writing to the buffer starts at a time to during the first cycle such that, during the first cycle, the entire buffer is read with an initial information content and not an updated content due to the writing process. On the other hand, writing to the buffer ends at a time t₂ during the second cycle such that, during the second cycle, the entire buffer contains updated information content when it is read. This is shown by write pointer 616 preceding read pointer 612 in time over the second reading cycle. Accordingly, image tearing will not occur over both reading cycles in the example of FIG. 6B.

### Buffer Update Through a Communication Link

Methods and systems for updating a buffer according to the present invention may be used in a variety of applications. In one application, as described above, the buffer update approach may be used to update a frame buffer associated with a display. In another application, the buffer is updated remotely, wherein it is written to by a first processor and is read by a second processor, and wherein the first and second processors communicate through a communication link. For example, the first and second processors represent an MSM baseband processor and an LCD module, respectively, that communicate through an MDDI link, as illustrated in FIG. 2. In certain applications, synchronization between the first and second processors will be required.

Methods and systems related to synchronization to enable buffer update across a communication link will now be provided. As will be understood by a person skilled in the art(s) based on the teachings herein, certain aspects of the methods and systems that will be presented may be applicable to synchronization problems in general, and are not limited to synchronization for enabling remote buffer update.

In one aspect, synchronization between the first and second processors includes scheduling a first event at the first processor that is triggered by a second event at the second processor. This is typically done by writing to a register to enable the triggering of an interrupt that causes the first event at the first processor whenever the second event occurs at the second processor. For example, in a remote buffer update application, where the buffer is updated by the first processor and read by the second processor, the first event may represent the need to start writing to the buffer, while the second event may represent that the read pointer has finished a complete reading cycle of the buffer. The second event may then be triggered at the second processor based on the read line position in the buffer.

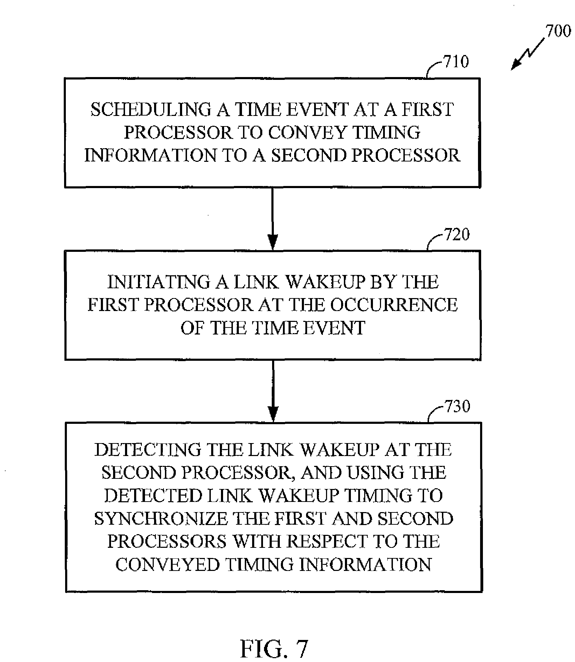

In another aspect, methods to convey synchronization information across the communication link are provided. The methods may be employed to relay synchronization information related to buffer update, as described above, for example. FIG. 7 is a process flowchart 700 that illustrates a method for conveying timing information across a communication link between a first processor and a second processor, when the communication link is in hibernation mode. Process flowchart 700 begins in step 710, which includes scheduling a time event at the first processor to convey timing information to the second processor. The time event may be a periodic event as required by the specific application. For example, in the case of a buffer update application, the time event may be related to the read line position in the buffer.

Step 720 includes initiating a link wakeup by the first processor at the occurrence of the time event. For example, in the case of a buffer update across an MDDI link, where an MDDI client is located at the LCD module side of the interconnection, the MDDI client may initiate a link wakeup by driving the data signal to a logic one to notify the MDDI host that the buffer should be updated.

Subsequently, step 730 includes detecting the link wakeup at the second processor (for example, an MDDI host on the MSM side of the MDDI interconnection), and using the detected link wakeup timing to synchronize the first and second processors with respect to the timing information that is being conveyed. For example, in the case of a buffer update across an MDDI link, when the MDDI host detects the link wakeup by the MDDI client, it can synchronize itself with the MDDI client with respect to the buffer update start time.

It can be appreciated by a person skilled in the art based on the teachings herein that the method described in FIG. 7 may be extended to convey any kind of timing information across a communication link, and is not limited to buffer update synchronization purposes. The advantages of such method are through saving the link and conveying information by simply waking the link up.

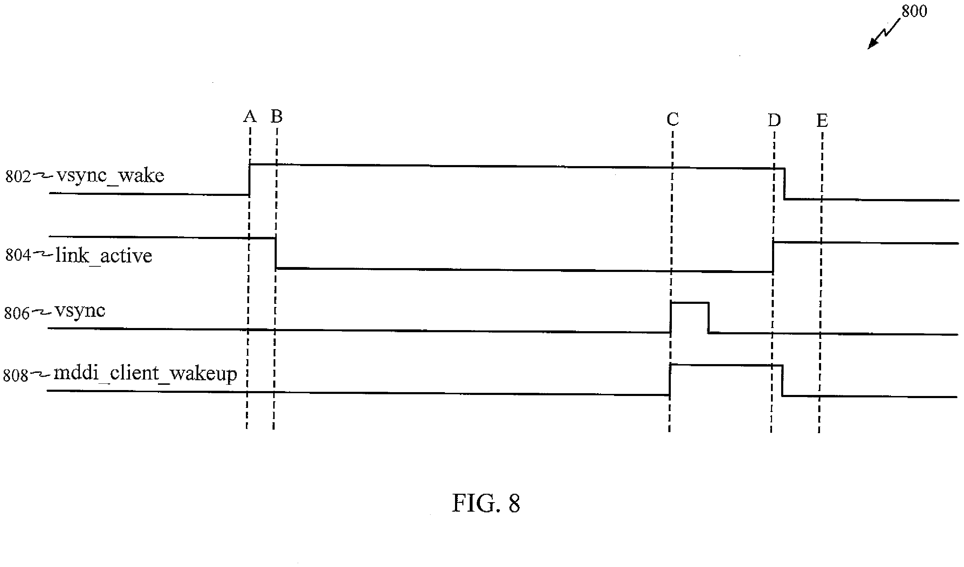

FIG. 8 illustrates an example timing diagram 800 for initiating link wakeup to convey timing information across an MDDI interconnection. For example, the MDDI interconnection may be such as the one described above with reference to FIG. 2 with an MDDI host located at the MSM and an MDDI client located at the LCD module. The MDDI client, accordingly, would initiate a link wakeup to convey buffer update information to the MDDI host, which, in turn, would start refreshing the buffer located in the LCD module. In the example of FIG. 8, vsync_wake signal 802 represents a value written to a register at the MDDI host to enable a wakeup at the host based on vsync signal 806. Wakeup at the host occurs whenever the value of vsync_wake 802 is high. Vsync signal 806 represents a value of a signal "vertical sync", which occurs at the client and is related to buffer update time. For example, vsync 806 goes high whenever the read pointer has wrapped and is reading from the beginning of the buffer. Link_active signal 804 represents whether or not the data signal of the MDDI interconnection is active or in hibernation. Mddi_client_wakeup signal 808 represents a signal at the client, which responds to vsync 806 to wake up the client.

In the example of FIG. 8, vsync_wake 802 is set at the host at time A. At time B, the MDDI link goes into hibernation mode. At time C, vsync 806 goes high indicating that the buffer needs to be refreshed by the host. As a result, mddi_client_wakeup 808 also goes high to wake the client up to initiate the link wakeup. The client initiates the link wakeup by driving the data signal of the interconnection, and the link goes active at time D. Subsequently, vsync_wake 802 and mddi_client_wakeup return to zero, and the host detects the link wakeup and begins to refresh the buffer at the client.

### Conclusion

While various embodiments of the present invention have been described above, it should be understood that they have been presented by way of example only, and not limitation. It will be apparent to persons skilled in the relevant art that various changes in form and detail can be made therein without departing from the spirit and scope of the invention. Thus, the breadth and scope of the present invention should not be limited by any of the above-described exemplary embodiments, but should be defined only in accordance with the following claims and their equivalents.

### Further Aspects

In the following further aspects are described to facilitate the understanding of the invention.

In a first further aspect, a method for updating a buffer having a plurality of lines is described, comprising: (a) determining a read line position in the buffer, said read line position indicating a line currently being read from the buffer; (b) partitioning the buffer into at least a first section that is safe to update and a second section that must not be updated based on the read line position; and (c) writing data at a line of the first section to update the buffer, wherein the line follows the second section based on the read line position. Further, the read line position may be determined by determining a read pointer value. Also, the first section of the buffer may comprise at least one of: (i) lines of the buffer that may have been read in a last reading cycle of the buffer; and (ii) lines of the buffer that may be updated based on the read line position. Wherein (ii) may further comprise lines of the buffer that may be updated prior to the read line position reaching said lines based on a buffer read speed and a buffer write speed. Further, the second section of the buffer may comprise lines of the buffer that cannot be updated prior to the read line position reaching said lines based on a buffer read speed and a buffer write speed. Wherein the second section of the buffer may further comprise lines that must have been updated during a last reading cycle of the buffer. Also, the buffer may be written to by a first processor and may be read by a second processor. Also, the first and second processors may communicate remotely through a communication link. Wherein the first processor may update the buffer based on a first event at the first processor that is triggered by a second event at the second processor. The buffer updating may further comprise: (d) scheduling the first event by writing to a register to enable the triggering of an interrupt that causes the first event based on the second event; and (e) triggering the second event at the second processor based on the read line position of the buffer. Wherein the first event may represent a link wakeup event when the communication link is in hibernation mode. Also, the first and second processors may represent host and client controllers of a Mobile Display Digital Interface (MDDI) link. Further, the first controller may represent a Mobile Station Modem (MSM) baseband processor, and wherein the second controller may represent an LCD controller. Wherein the buffer may represent a frame buffer used for refreshing an LCD display. Further, wherein image tearing in the display may be substantially avoided.

In another further aspect, a method for conveying timing information across a communication link between a first processor and a second processor is described, wherein the communication link might be in hibernation mode, comprising: scheduling a time event at the first processor to convey the timing information to the second processor; initiating a link wakeup by the first processor at the occurrence of the time event; and detecting the link wakeup at the second processor, and using the detected link wakeup timing to synchronize the first and second processors with respect to the conveyed timing information. Wherein the communication link may represent a Mobile Display Digital Interface (MDDI) link. Also, the first and second processors may represent MDDI client and MDDI host, respectively. Further, the timing information may represent a buffer refresh time associated with a display being controlled across the MDDI link.

## Claims

1. A method for conveying timing information across a communication link between a first processor and a second processor, wherein the communication link is in hibernation mode, comprising:
scheduling a time event at the first processor to convey the timing information to the second processor;
initiating a link wakeup by the first processor at the occurrence of the time event; and
detecting the link wakeup at the second processor, and using the detected link wakeup timing to synchronize the first and second processors with respect to the conveyed timing information.

2. The method of claim 1, wherein the communication link represents a Mobile Display Digital Interface, MDDI, link.

3. The method of claim 2, wherein the first and second processors represent MDDI client and MDDI host, respectively.

4. The method of claim 3, wherein the timing information represents a buffer refresh time associated with a display being controlled across the MDDI link.

5. The method of claim 1, further comprising:
(d) scheduling the first event by writing to a register to enable the triggering of an interrupt that causes the first event based on the second event; and
(e) triggering the second event at the second processor based on the read line position of the buffer.

6. The method of claim 5, wherein the first event represents a link wakeup event when the communication link is in hibernation mode.

7. A system for conveying timing information across a communication link between a first processor and a second processor, wherein the communication link is in hibernation mode, comprising:
means for scheduling a time event at the first processor to convey the timing information to the second processor;
means for initiating a link wakeup by the first processor at the occurrence of the time event; and
means for detecting the link wakeup at the second processor, and using the detected link wakeup timing to synchronize the first and second processors with respect to the conveyed timing information.

8. The system of claim 7, wherein the communication link represents a Mobile Display Digital Interface, MDDI, link.

9. The system of claim 8, wherein the first and second processors represent MDDI client and MDDI host, respectively.

10. The system of claim 9, wherein the timing information represents a buffer refresh time associated with a display being controlled across the MDDI link.

11. The system of claim 7, further comprising:
(d) means for scheduling the first event by writing to a register to enable the triggering of an interrupt that causes the first event based on the second event; and
(e) means for triggering the second event at the second processor based on the read line position of the buffer.

12. The system of claim 11, wherein the first event represents a link wakeup event when the communication link is in hibernation mode.

13. A computer program product, comprising:
a computer-readable medium comprising:
code for causing at least one computer to perform a method according to any of claims 1 to 6 when executed.
